Europäisches Patentamt

European Patent Office

Office européen des brevets

(11) Veröffentlichungsnummer: **0 347 722 B1**

(12) **EUROPÄISCHE PATENTSCHRIFT**

(45) Veröffentlichungstag der Patentschrift: **16.12.92**

(21) Anmeldenummer: **89110686.6**

(22) Anmeldetag: **13.06.89**

Verbunden mit 89906774.8/0420885 (europäische Anmeldenummer/Veröffentlichungsnummer) durch Entscheidung vom 04.03.92.

(51) Int. Cl.5: **H02K  29/14**, H02K 23/66, G01P 3/46

(54) **Tachogenerator.**

(30) Priorität: **22.06.88 DE 3821050**

(43) Veröffentlichungstag der Anmeldung: **27.12.89 Patentblatt  89/52**

(45) Bekanntmachung des Hinweises auf die Patenterteilung: **16.12.92 Patentblatt  92/51**

(84) Benannte Vertragsstaaten: **AT BE CH DE ES FR GB GR IT LI LU NL SE**

(56) Entgegenhaltungen: **EP-A- 0 149 360 WO-A-84/01477 US-A- 4 410 853**

**PATENT ABSTRACTS OF JAPAN Band 12, Nr. 146 (E-605)(2993) 6. Mai 1988 & JP-A-62 262645**

**PATENT ABSTRACTS OF JAPAN Band 10, Nr. 104 (E-397)(2161), 19. April1986 & JP-A-60 241756**

(73) Patentinhaber: **Deutsche Thomson-Brandt GmbH Postfach 2060 W-7730 Villingen-Schwenningen(DE)**

(72) Erfinder: **Schalk, Adelbert, Dipl.-Ing. Dorneckstrasse 5 W-7896 Wutöschingen-Horheim(DE)**

(74) Vertreter: **Einsel, Robert, Dipl.-Ing. Deutsche Thomson-Brandt GmbH Patent- und Lizenzabteilung Göttinger Chaussee 76 W-3000 Hannover 91(DE)**

## Beschreibung

Für den Antrieb einer Kopftrommel z.B. bei Videorecordern sind servogesteuerte Motore bekannt, die mit einem oder mehreren Tachogeneratoren nach dem Oberbegriff von Anspruch 1 ausgerüstet sind. Die mäanderförmigen Windungen und auch die zugehörigen Polpaare im Rotor sind radial ausgerichtet. Während der Rotation wird in der durch die mäanderförmige Anordnung der einzelnen Windungen ausgebildeten Spule ein Signal mit einer von der Drehzahl abhängigen Frequenz erzeugt. Dieses Signal wird im Servosystem des Gerätes ausgewertet um daraus eine Nachsteuerung für die Drehzahlsteuerung des Motors abzuleiten. Zusätzlich weisen bekannte Systeme einen sogenannten Pick-up-Pulse-Generator auf, durch den ein oder mehrere Umschaltimpulse bei jeder Rotorumdrehung erzeugt werden. Diese Impulse dienen der synchronen Steuerung zwischen dem aufgezeichneten Signal und der Ablaufsteuerung im Gerät. Die EP-A- 0 149 360 und die US-A- 4 410 853 beschrieben derartige Tachogeneratoren.

Es ist Aufgabe der Erfindung, mit nur einer Generatoranordnung die erforderlichen Steuersignale zu erzeugen.

Diese Aufgabe wird gemäß der Erfindung durch im Anspruch 1 oder 2 aufgeführten Merkmale gelöst. Weiterbildungen der Erfindung sind in den abhängigen Unteransprüchen gekennzeichnet.

Im Prinzip werden bei dem erfindungsgemäßen Tachogenerator nach Anspruch 1 durch die Wirkung von Azimutwinkeln -sowohl im Statorteil als auch im Rotorteil- unterschiedliche Signale mit nur einem Generator erzeugt. Während in dem einen Generatorteil, bei dem die mäanderförmigen Windungen einer ersten Spule z. B. um +45° gegenüber einem Punkt auf dem Spulendurchmesser geneigt sind, eine Frequenz für die Regelung der Motorgeschwindigkeit erzeugt wird, können die Pick-up-Impulse in einer zweiten Spule, deren mäanderförmige Windungen z.B. um -45° geneigt sind, erzeugt werden. Beide Spulen weisen den gleichen mittleren Windungsdurchmesser auf.

Die Anordnung der Polpaare im rotierenden Teil d.h. deren Zahl und Richtung muß der Anordnung der Spulen entsprechen. Dieses wird bei einem Magnetisierungsvorgang der Magnetscheibe durch ein Einzelpolpaar erreicht, welches über einen Drehversteller entsprechend positioniert werden kann. So wird z.B. zunächst die Magnetisierung für die Drehzahlregelung, also für den Frequenzgenerator durchgeführt, in dem über den gesamten Umfang Polpaare mit +45° aufmagnetisiert werden. In einem zweiten Magnetisierungsvorgang mit dem auf -45° ausgerichteten Einzelpolpaar wird die bestehende Magnetisierung in bestimmten Abständen, die der Anordnung der Mäander der zweiten Spule entsprechen, überschrieben.

Im folgenden soll die Erfindung gemäß Anspruch 1 und den zugeordneten Unteransprüchen anhand eines Ausführungsbeispieles näher erläutert werden:

Fig. 1     zeigt eine Anordnung der mäanderförmigen Windungen in einer Ebene für zwei Spulen mit Azimutwinkelversatz,

Fig. 2     zeigt eine Anordnung entsprechend Fig.1 für eine höhere Frequenzgeneratoramplitude,

Fig. 3     zeigt eine Anordnung der Magnetisierung der Magnetscheibe in Zuordnung zu Fig. 1,

Fig. 4     zeigt die räumliche Zuordnung der mäanderförmigen Windungen zur Magnetscheibe,

Fig. 5     zeigt in einem Ausschnitt den Verlauf der in den Spulen erzeugten Signale.

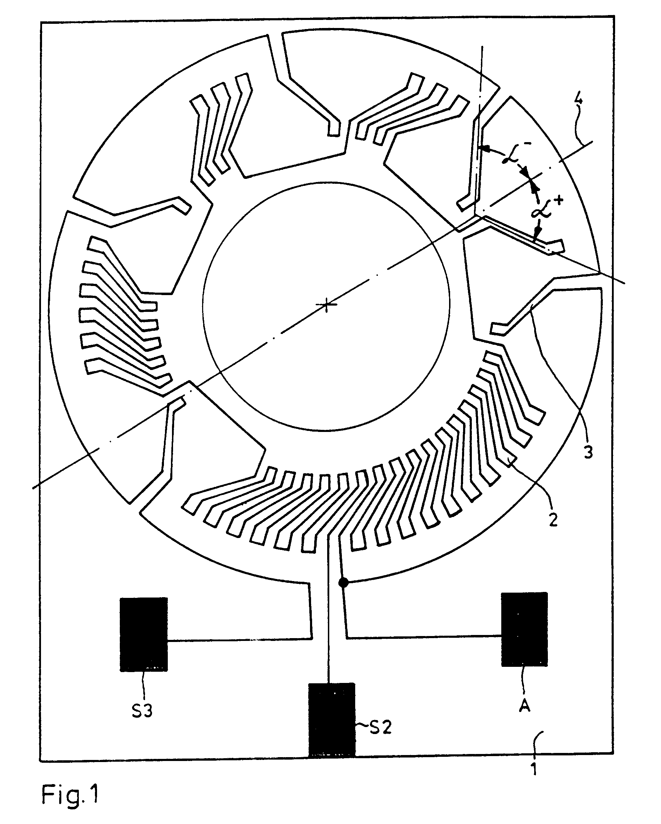

Fig. 1 zeigt eine Anordnung der mäanderförmigen Windungen in einer Ebene für zwei Spulen mit Azimutwinkelversatz. Auf einer gemeinsamen Grundplatte 1 sind die Spulen 2 und 3 kreisförmig z. B. als gedruckte Leiterbahnen ausgeführt. Die Spulen sind ineinander verschachtelt und haben einen gemeinsamen Anschlußpunkt A. Die Spule 2 dient als Frequenzgenerator. Ihre mäanderförmigen Windungen sind unter einem Winkel +, bezogen auf einen Punkt der Mittellinie 4, ausgeführt. Die einzelnen Windungen sind in Reihe geschaltet. Den Anschluß für diese Spule bildet der Punkt S2. Die Spule 3 ist für die Erzeugung von Pick-up-Signalen vorgesehen. Die einzelnen mäanderförmigen Windungen sind unter einem Winkel von - ausgeführt. Der Anschlußpunkt für diese Spule ist S3. Im vorliegenden Beispiel sind zwei ineinander verschachtelte Spulen dargestellt. Es ist aber auch möglich, weitere Spulen z.B. für die Erzeugung weiterer Pick-up-Signale auf dem Kreisumfang anzuordnen.

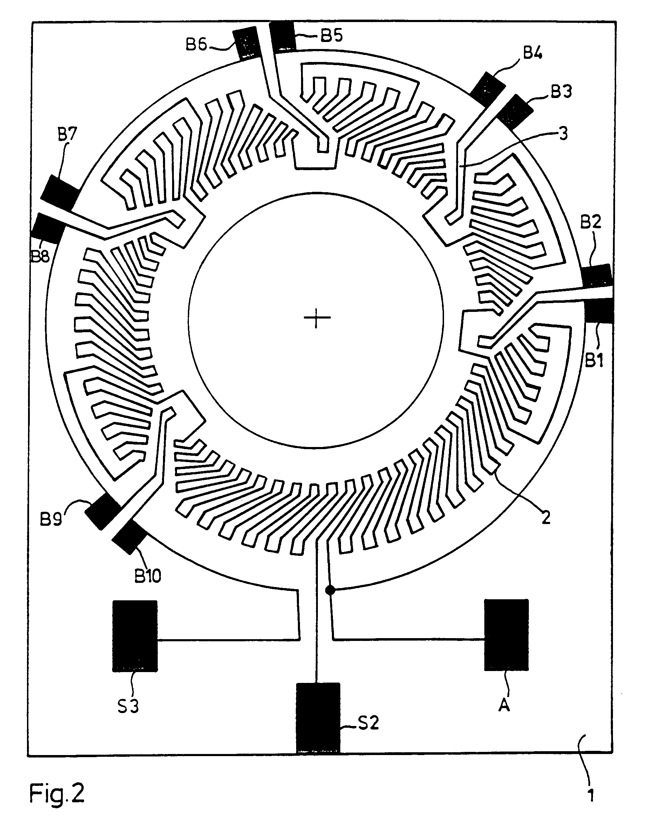

Fig. 2 zeigt eine Anordnung entsprechend Fig.1. Durch eine modifizierte Spule 2 wird eine höhere Frequenzgeneratoramplitude erreicht. An den Anschlüssen B1 bis B10 von Spule 3 können mehrere Einzelimpulse abgegriffen werden. In einer anderen nicht dargestellten Ausführungsform mit einer in doppelseitiger Kaschierung ausgeführten Leiterplatte, deren Dicke möglichst gering sein sollte, ist es möglich, auf der einen Seite der Platte die Spule 2 durchgehend, also ohne Unterbrechung durch Spule 3 auszuführen, während sich auf der anderen Seite der Platte die Spule 3 befindet.

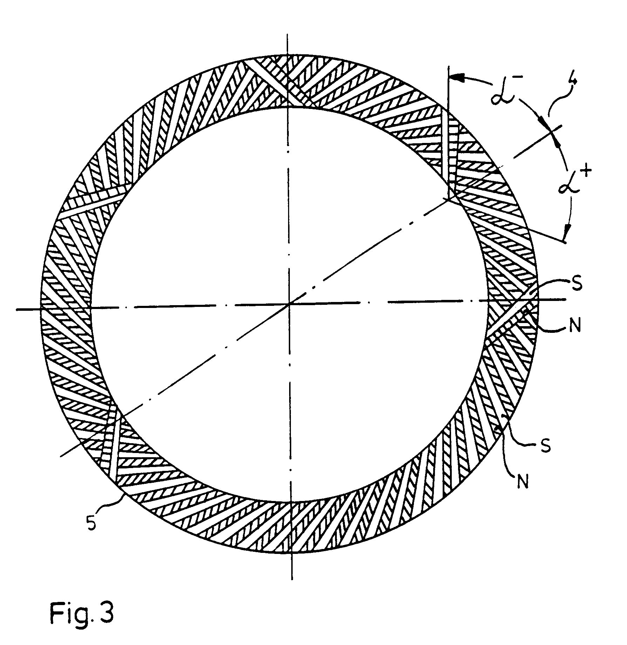

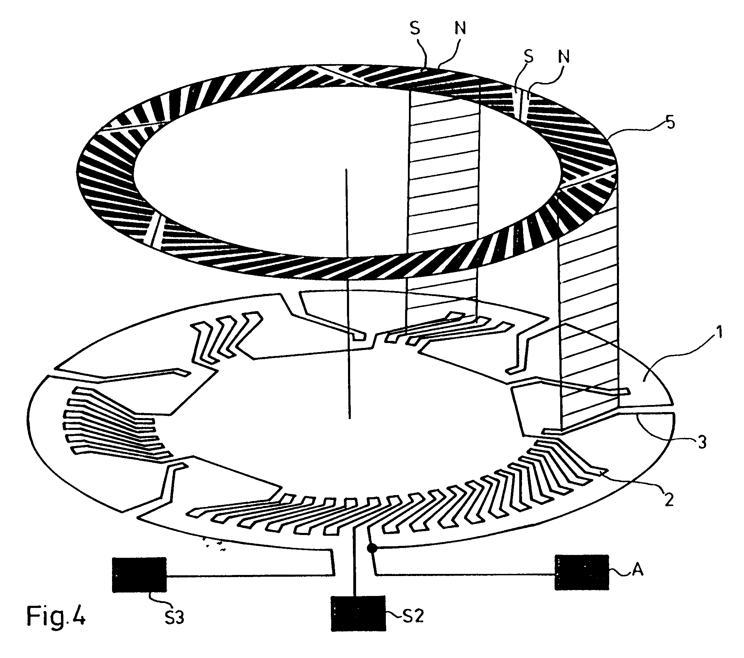

Fig. 3 zeigt eine Anordnung der Magnetisierung der Magnetscheibe in Zuordnung zu Fig. 1. Die Magnetscheibe 5 ist als Kreisring ausgeführt. Sie ist mit dem rotierenden Teil des Motors durch eine nichtdargestellte Verbindung gekuppelt. Die Magnetscheibe 5 ist -wie in Fig. 4 gezeigt- zentrisch mit geringem Abstand zu der feststehenden Leiterplatte angeordnet, um bei Rotation der Scheibe einen möglichst großen Signalpegel in den Spulen zu erzeugen. Die eingezeichneten Polpaare N, S, entsprechen in ihrer geometrischen Anordnung der Anordnung der Windungen von Fig. 1. Die Mehrzahl der Polpaare ist unter einem Winkel von + angeordnet, während 5 Polpaare den Winkel von - aufweisen. Dreht sich der Rotor, so liegen sich einmal pro Umdrehung die 5 Magnetpolpaare und die zugehörigen mäanderförmigen Windungen von Spule 3 direkt gegenüber. In jeder dieser Windungen werden nach dem Induktionsgesetz Einzelspannungen induziert, so daß an Anschluß S3 von Spule 3 die 5-fache Spannung einer einzelnen Windung ansteht. Bei Weiterdrehen des Rotors bzw. der Magnetscheibe wird dagegen in Spule 3 durch die mit Azimut versehenen Polpaare für den Frequenzgenerator nur eine geringe Spannung induziert, von denen sich die gewünschten Pick-up-Impulse deutlich abheben.

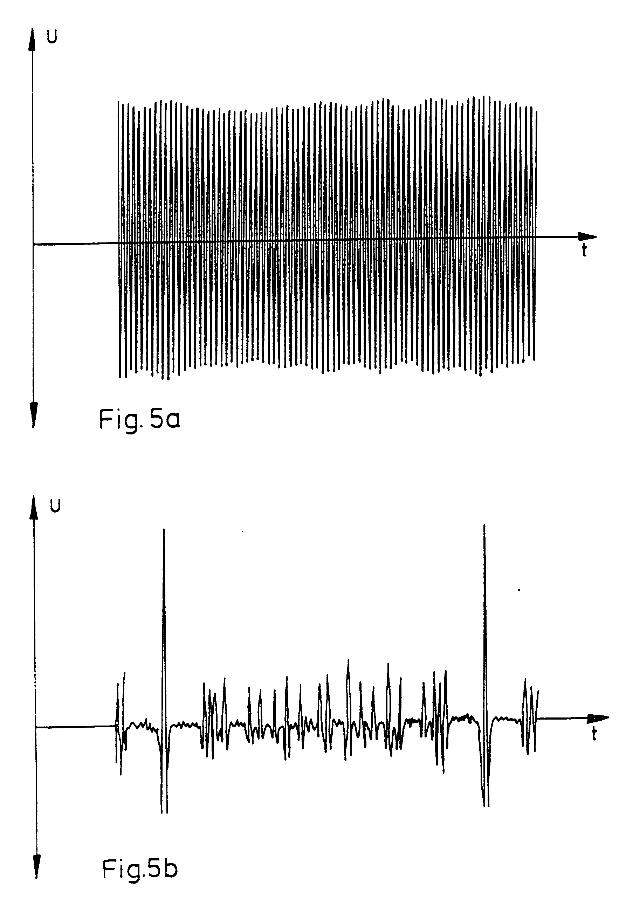

Der Verlauf der in den Spulen 2 und 3 erzeugten Signale ist in Fig. 5 dargestellt. Fig. 5a zeigt über der Zeit t die Spannung U der Signale des Frequenzgenerators, also von Spule 2, während in Fig. 5b die Pick-up-Signale, erzeugt in Spule 3, dargestellt sind.

Eine weitere Möglichkeit, mittels ineinander verschachtelter Spulen mit gleichem Spulendurchmesser bei gleicher Ausrichtung der einzelnen mäanderförmigen Windungen der Spulen sowohl Frequenzgeneratorsignale als auch Pick-up-Signale zu erzeugen, besteht darin, die Windungen für die Pick-up-Spule und deren zugehörige Magnetpolpaare mit unterschiedlicher Teilung innerhalb der Frequenzgeneratorspule nebst zugehöriger Magnetpolpaare einzuordnen. Die Teilung für die Pick-up-Spule ist derart gewählt, daß bei gerader Windungszahl die eine Hälfte der Windungen die Teilung des Frequenzgenerators aufweist, wogegen die zweite Hälfte eine um eine halbe Teilung versetzte Anordnung aufweist. Dadurch wird erreicht, daß bei einer bestimmten Stellung der Magnetscheibe zur Pick-up-Spule von den zugehörigen Magnetpolpaaren gleichphasige Spannungen in den einzelnen Windungen induziert werden, die durch Addition einen Impuls pro Umdrehung erzeugen. Da die Teilung im Frequenzgenerator konstant ist, werden durch die Magnetpolpaare des Frequenzgenerators in den Windungen der Pick-up-Spule eine gleichgroße Zahl von gleich- und gegenphasigen Spannungen erzeugt, die sich in ihrer Addition gegeneinander aufheben. Auch ist es möglich, durch Auslegung der Anordnung der Magnetpolpaare zwei oder mehrere Impulse während einer Umdrehung in der Pick-up-Spule zu erzeugen.

Im folgenden soll anhand eines Ausführungsbeispiels diese Art der Signalerzeugung aufgezeigt werden.

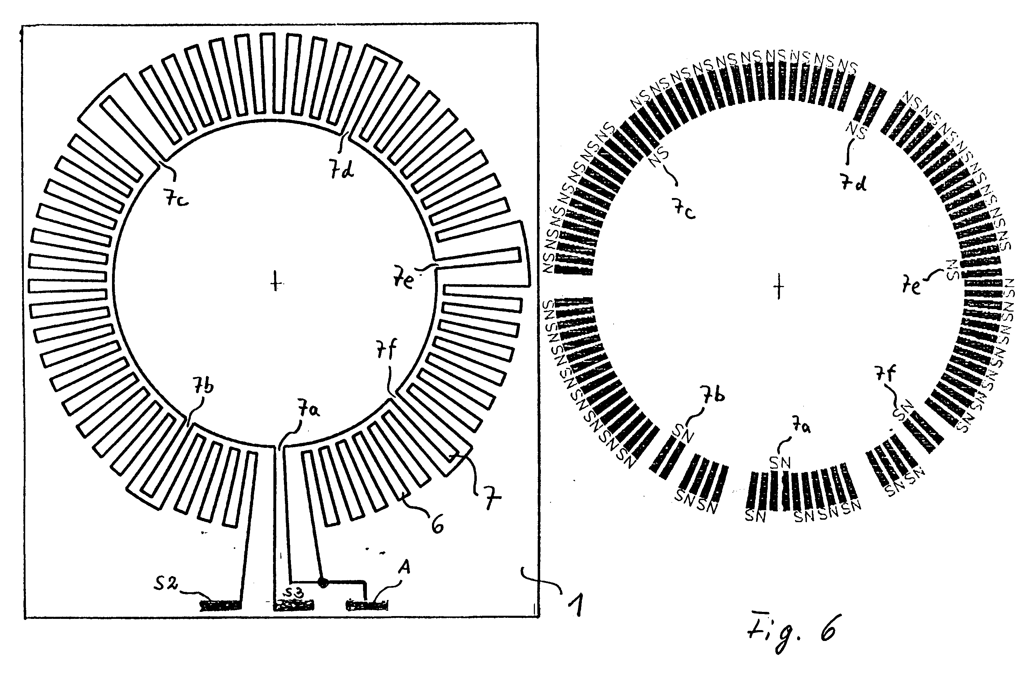

Figur 6 zeigt eine Anordnung der mäanderförmigen Windungen in einer Ebene nebst zugehöriger Magnetscheibe für zwei Spulen ohne Azimutversatz.

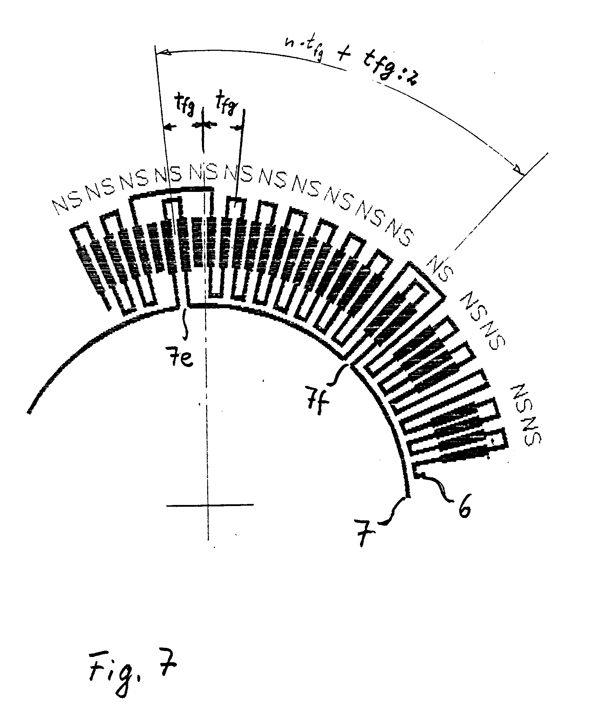

Figur 7 zeigt in einem Ausschnitt die Zuordnung der Magnetpolpaare zu den Windungen der Spulen 6 und 7.

Figur 6 zeigt links eine Anordnung der mäanderförmigen Windungen in einer Ebene für zwei Spulen mit gleichem Spulendurchmesser ohne Azimutversatz. Auf einer gemeinsamen Grundplatte 1 sind die Spulen 6 und 7 kreisförmig z.B. als gedruckte Leiterbahn ausgeführt. Die Spulen sind ineinander verschachtelt und haben einen gemeinsamen Anschlußpunkt A. Die Spule 6 dient als Frequenzgenerator. Ihre mäanderförmigen Windungen sind in Reihe geschaltet und weisen Aussparungen auf, in denen die Spule 7 angeordnet ist. Den Anschluß für Spule 6 bildet der Punkt S2. Die Spule 7 ist für die Erzeugung von Pick-up-Signalen vorgesehen. Der Anschlußpunkt für diese Spule ist S3. Während Spule 6 für den Frequenzgenerator viele Windungen mit einer konstanten Teilung aufweist, ist die Teilung für die sechs Windungen von Spule 7 unterschiedlich ausgeführt. Die einzelnen Windungen sind im Uhrzeigersinn mit 7a bis 7f beschriftet. Es ist zu erkennen, daß die Windungen dieser Spule so gelegt sind, daß die Teilung der Windungen 7a, 7c und 7e mit der Teilung der Windungen für den Frequenzgenerator übereinstimmen, während die Windungen 7b, 7d und 7f um eine halbe Teilung versetzt sind. Diese Anordnung bedeutet, daß die Magnetpolpaare des Frequenzgenerators in den einzelnen Windungen der Pick-up-Spule Windungsspannungen induzieren, die sich in ihrer Addition gegenseitig aufheben. Es wird also von den Magnetpolpaaren des Frequenzgenerators in der Spule 7 keine Spannung erzeugt. Demgegenüber weisen die in ihrer Anordnung den Windungen der Pick-up-Spule zugeordneten Magnetpolpaare für den Pick-up-Generator, wie in Figur 6 rechts dargestellt, ebenfalls drei um eine halbe Teilung versetzte Magnetpolpaare auf, so daß bei einer vorbestimmten Stellung der Magnetscheibe während einer Umdrehung in allen sechs Windungen der Pick-up-Spule gleichphasige Spannungen induziert werden, die in ihrer Addition einen Pick-up-Impuls mit großer Amplitude ergeben.

Figur 7 zeigt in einem Ausschnitt die Zuordnung der Magnetpolpaare zu den Windungen der Spulen 6 und 7. Es sind von Spule 7 aus Figur 6 die Windungen 7e und 7f dargestellt. Während das über Windung 7e gezeichnete Magnetpolpaar ebenso wie die Windung 7e im Raster der Teilung tfg des Frequenzgenerators liegt, ist die Windung 7f mit dem zugehörigen Magnetpolpaar um eine halbe Teilung = tfg + tfg:2 versetzt. Die gezeichnete Stellung der Magnetscheibe entspricht daher dem Zustand, in welchem alle sechs Pick-up-Magentpolpaare über den zugehörigen Mäanderwindungen von Spule 7 stehen. Die einzelnen Windungsspannungen sind also phasengleich und addieren sich zu einem Pick-up-Impuls.

**Patentansprüche**

1. Tachogenerator für einen servogesteuerten Motor, mit einer in einem Kreisring angeordneten, mäanderförmige Windungen aufweisenden, feststehenden flachen Spulenanordnung (2,3) und mit einer zentrisch über der Spulenanordnung in geringem Abstand rotierenden, Magnetpolpaare aufweisenden Magnetscheibe (5), **dadurch gekennzeichnet,** daß:
   a) die Mehrzahl der Windungen eine, einen mittleren Spulendurchmesser aufweisende erste Spule (2) bilden, deren mäanderförmige Windungen unter einem ersten Winkel mit gleichmäßiger Teilung zum Kreisdurchmesser (4) ausgerichtet sind, und daß eine der Teilung und der Zahl der Mäander zugeordnete erste Zahl von Polpaaren (N,S) der Magnetscheibe (5) in Richtung dieser Mäander ausgerichtet ist;
   b) eine Windung oder mehrere über den Kreisumfang verteilte Windungen mit dem mittleren Durchmesser der ersten Spule (2) eine zweite Spule (3) bilden, deren mäanderförmige Windungen unter einem zweiten Winkel zum Kreisdurchmesser (4) ausgerichtet sind und daß eine der Zahl und Teilung der Windungen der zweiten Spule (3) zugeordnete zweite Zahl von Polpaaren der Magnetscheibe (5) in Richtung dieser Mäander ausgerichtet ist, wobei die Verteilung der zweiten Polpaare am Umfang derart ausgebildet ist, daß an einer vorbestimmten Stellung der Magnetscheibe (5) während einer Umdrehung in den einzelnen Windungen der zweiten Spule (3) Spannungen durch die zweiten Polpaare induziert werden.

2. Tachogenerator für einen servogesteuerten Motor, mit einer in einem Kreisring angeordneten, mäanderförmige Windungen aufweisenden, feststehenden flachen Spulenanordnung (6,7) und mit einer zentrisch über der Spulenanordnung in geringem Abstand rotierenden, Magnetpolpaare aufweisenden Magnetscheibe (8), **dadurch gekennzeichnet,** daß:
   a) die Mehrzahl der Windungen eine einen mittleren Spulendurchmesser aufweisende erste Spule (6) bilden, deren mäanderförmige Windungen unter einem ersten Winkel mit gleichmäßiger Teilung zum Kreisdurchmesser (4) ausgerichtet sind, und daß eine der Teilung und der Zahl der Mäander zugeordnete erste Zahl von Polpaaren (N,S) der Magnetscheibe (8) in Richtung dieser Mäander ausgerichtet ist;
   b) mehrere, über einen Kreisumfang nach einem vorbestimmten Schema verteilte Windungen, mit dem mittleren Spulendurchmesser der ersten Spule (6) eine zweite Spule (7) bilden, deren mäanderförmige Windungen unter dem Winkel der ersten Spule (6) zum Kreisdurchmesser (4) ausgerichtet sind, und daß eine der Zahl der Windungen der zweiten Spule (7) zugeordnete zweite Zahl von Polpaaren der Magnetscheibe (8) in Richtung dieser Mäander ausgerichtet ist, wobei die Verteilung der Windungen der zweiten Spule (7) nebst zugehöriger Polpaare derart ausgebildet ist, daß an einer vorbestimmten Stellung der Magnetscheibe (8) während einer Umdrehung in einzelnen Windungen der zweiten Spule (7) Spannungen durch die zweiten Polpaare in gleicher Richtung (phasengleich) induziert werden.

3. Tachogenerator nach Anspruch 1, **dadurch gekennzeichnet**, daß die Mäander der ersten Spule (2) unter einem positiven und die Mäander der zweiten Spule (3) unter einem negativen Winkel zum Kreisdurchmesser (4) ausgerichtet sind.

4. Tachogenerator nach Anspruch 3, **dadurch gekennzeichnet**, daß beide Winkel gleich groß sind.

5. Tachogenerator nach Anspruch 4, **dadurch gekennzeichnet**, daß die Winkel 45° betragen.

6. Tachogenerator nach einem der Ansprüche 1 oder 2, **dadurch gekennzeichnet**, daß die Spulen (2,3,6,7) ineinander verschachtelt auf einer Leiterplattenseite (1) angeordnet sind.

7. Tachogenerator nach einem der Ansprüche 1 oder 2, **dadurch gekennzeichnet**, daß die Spulen (2,3,6,7) voneinander getrennt auf einer doppelseitig kaschierten Leiterplatte angeordnet sind.

8. Tachogenerator nach einem der Ansprüch 1 oder 2, **dadurch gekennzeichnet**, daß die Magnetpolpaare der Magnetscheibe (5,8) ineinander verschachtelt sind.

9. Tachogenerator nach einem der Ansprüche 1 oder 2, **dadurch gekennzeichnet**, daß die zweite Zahl der Polpaare (N,S) der Zahl der zugeordneten Mäander entspricht.

10. Tachogenerator nach einem der Ansprüche 1 oder 2, **dadurch gekennzeichnet**, daß mehr als zwei Spulen ineinander verschachtelt sind.

11. Tachogenerator nach einem der Ansprüche 1 oder 2, **dadurch gekennzeichnet**, daß die Anordnung der zweiten Spule (3,7) oder der zugehörigen Magnetpolpaare so gewählt ist, daß ein oder mehrere Impulse pro Umdrehung erzeugt werden.

12. Tachogenerator nach Anspruch 2, **dadurch gekennzeichnet**, daß die Windungszahl der zweiten Spule (7) geradzahlig ist.

**Claims**

1. Tacho-generator for a servo-controlled motor, with a stationary, flat coil arrangement (2, 3) arranged in a circular ring and comprising meander-shaped windings and with a magnetic disc (5) rotating at a short distance centrally above the coil arrangement and comprising pairs of magnetic poles, **characterised in that**:

   a) the majority of the windings form a first coil (2) exhibiting a mean coil diameter, whose meander-shaped windings are aligned at a first angle with respect to the circle diameter (4) with uniform division, and that a first number of pairs of poles (N, S) of the magnetic disc (5) associated with the division and number of the meanders is aligned in the direction of said meanders;
   b) a winding or several windings distributed over the circle circumference with the same mean diameter as the first coil (2) form a second coil (3) whose meander-shaped windings are aligned at a second angle with respect to the circle diameter (4) and that a second number of pairs of poles of the magnetic disc (5) associated with the number and division of the windings of the second coil (3) is aligned in the direction of these meanders, the distribution of the second pairs of poles at the circumfernce being arranged in such a way that at a pre-determined point of the magnetic disc (5), during a rotation, voltages are induced in the individual windings of the second coil (3) by the second pairs of poles.

2. Tacho-generator for a servo-controlled motor, with a stationary, flat coil arrangement (6, 7) arranged in a circular ring and comprising meander-shaped windings and with a magnetic disc (8) rotating at a short distance centrally above the coil arrangement and comprising pairs of magnetic poles, **characterised in that**:

   a) the majority of the windings form a first coil (6) exhibiting a mean coil diameter, whose meander-shaped windings are aligned at a first angle with respect to the circle diameter (4) with uniform division, and that a first number of pairs of poles (N, S) of the magnetic disc (8) is associated with the division and number of the meanders and aligned in the direction of said meanders;
   b) several windings distributed over a circle circumference according to a pre-determined arrangement, with the same mean coil diameter as the first coil (6), form a second coil (7) whose meander-shaped windings are aligned at the angle of the first coil (6) with respect to the circle diameter (4), and that a second number of pairs of poles of the magnetic disc (5) associated with the number of windings of the second coil (7) is aligned in the direction of these meanders, the distribution of the windings of the second coil 7) together with associated pairs of poles being arranged in such a way that at a pre-determined point of the magnetic disc (8), during a rotation, voltages are induced in individual windings of the second coil (7) by the second pairs of poles in the same direction (in the same phase).

3. Tacho-generator according to claim 1, **characterised in that** the meanders of the first coil (2) are aligned at a positive angle and the meanders of the second coil (3) are aligned at a negative angle with respect to the circle diameter (4).

4. Tacho-generator according to claim 3, **characterised in that** the two angles are of equal size.

5. Tacho-generator according to claim 4, **characterized in that** the angles come to 45°.

6. Tacho-generator according to any one of claims 1 or 2, **characterized in that** the coils (2, 3, 6, 7) are arranged nested in one another on a printed circuit board side (1).

7. Tacho-generator according to any one of claims 1 or 2, **characterized in that** the coils (2, 3, 6, 7) are arranged separately from one another on a double-faced printed circuit board.

8. Tacho-generator according to any one of claims 1 or 2, **characterized in that** the pairs of magnetic poles of the magnetic disc (5, 8) are nested in one another.

9. Tacho-generator according to any one of claims 1 or 2, **characterized in that** the second number of pairs of poles (N, S) corresponds to the number of associated meanders.

10. Tacho-generator according to any one of claims 1 or 2, **characterized in that** more than two coils are nested in one another.

11. Tacho-generator according to any one of claims 1 or 2, **characterized in that** the arrangement of the second coils (3, 7) or of the corresponding pairs of magnetic poles is selected so that one or more pulses are generated per rotation.

12. Tacho-generator according to claim 2, **characterized in that** the number of windings of the second coil (7) is an even number.

**Revendications**

1. Génératrice tachymétrique pour un moteur à servocommande avec un arrangement de bobines (2, 3) plat, fixe, présentant des spires en forme de méandres, placé en anneau de cercle, et avec un disque magnétique (5), qui présente des paires de pôles magnétiques, qui tourne en étant centré à un faible écart au-dessus de l'arrangement de bobines, **caractérisée en ce** que :

a) la plus grande partie des spires forment une première bobine (2), qui présente un diamètre de bobine moyen, dont les spires en forme de méandres sont orientées par rapport au diamètre du cercle (4) en formant un premier angle avec un pas uniforme et qu'un premier nombre de paires de pôles (N, S) du disque magnétique (5), qui correspond au pas et au nombre des méandres, est orienté en direction de ces méandres ;

b) qu'une spire ou plusieurs spires réparties sur la périphérie du cercle, avec le diamètre moyen de la première bobine (2), forment une seconde bobine (3) dont les spires en forme de meándres sont orientées par rapport au diamètre du cercle (4) en formant un second angle et qu'un second nombre de paires de pôles du disque magnétique (5), qui correspond au nombre et au pas des spires de la seconde bobine (3), est orienté en direction de ces méandres, la répartition des secondes paires de pôles sur la périphérie étant telle qu'à une position prédéfinie du disque magnétique (5) des tensions sont induites pendant une rotation dans les différentes spires de la seconde bobine (3) par les secondes paires de pôles.

2. Génératrice tachymétrique pour un moteur à servocommande avec un arrangement de bobines (6, 7) plat, fixe, présentant des spires en forme de méandres, placé en anneau de cercle, et avec un disque magnétique (8), qui présente des paires de pôles magnétiques, qui tourne en étant centré à un faible écart au-dessus de l'arrangement de bobines, **caractérisée en ce** que :

a) la plus grande partie des spires forment une première bobine (6), qui présente un diamètre de bobine moyen, dont les spires en forme de méandres sont orientées par rapport au diamètre du cercle (4) en formant un premier angle avec un pas uniforme et qu'un premier nombre de paires de pôles (N, S) du disque magnétique (8), qui correspond au pas et au nombre des méandres, est orienté en direction de ces méandres ;

b) que plusieurs spires réparties sur la périphérie d'un cercle selon un schéma prédéfini, avec le diamètre de bobine moyen de la première bobine (6) forment une seconde bobine (7) dont les spires en méandres sont orientées par rapport au diamètre du cercle (4) en formant l'angle de la première bobine (6) et qu'un second nombre de paires de pôles du disque magnétique (8), qui correspond au nombre des spires de la seconde bobine (7), est orienté en direction de ces méandres, la répartition des spires de la seconde bobine (7) et des paires de pôles correspondantes étant conçue de telle manière qu'à une position prédéfinie du disque magnétique (8) des tensions sont induites dans le même sens (de même phase) pendant une rotation dans les différentes spires de la seconde bobine (7) par les secondes paires de pôles.

3. Génératrice tachymétrique selon la revendication 1, **caractérisée en ce** que les méandres de la première bobine (2) sont orientés par rapport au diamètre du cercle (4) en formant un angle positif et que les méandres de la seconde bobine (3) sont orientés par rapport au diamètre du cercle (4) en formant un angle négatif.

4. Génératrice tachymétrique selon la revendication 3, **caractérisée en ce** que les deux angles sont de même grandeur.

5. Génératrice tachymétrique selon la revendication 4, **caractérisée en ce** que les angles sont de 45°.

6. Génératrice tachymétrique selon l'une des revendications 1 ou 3, **caractérisée en ce** que les bobines (2, 3, 6, 7) sont placées sur un côté de carte imprimée (1) en étant imbriquées l'une dans l'autre.

7. Génératrice tachymétrique selon l'une des revendications 1 ou 2, **caractérisée en ce** que les bobines (2, 3, 6, 7) sont placées sur une carte imprimée contrecollée des deux côtés en étant séparées l'une de l'autre.

8. Génératrice tachymétrique selon l'une des revendications 1 ou 2, **caractérisée en ce** que les paires de pôles magnétiques du disque magnétique (5, 8) sont imbriquées l'une dans l'autre.

9. Génératrice tachymétrique selon l'une des revendications 1 ou 2, **caractérisée en ce** que le second nombre des paires de pôles (N, S) correspond au nombre des méandres qui correspondent.

10. Génératrice tachymétrique selon l'une des revendications 1 ou 2, **caractérisée en ce** que plus de deux bobines sont imbriquées l'une dans l'autre.

11. Génératrice tachymétrique selon l'une des revendications 1 ou 2, **caractérisée en ce** que la disposition de la deuxième bobine (3, 7) au des paires de pôles magnétiques correspondantes est choisie de telle manière qu'une ou plusieurs impulsions sont produites par rotation.

12. Génératrice tachymétrique selon la revendication 2, **caractérisée en ce** que le nombre des enroulements de la seconde bobine (7) est pair.

Fig.1

Fig.2

Fig. 3

Fig.4

Fig. 5a

Fig.5b

Fig. 6

$$n \cdot t_{fg} + tfg : 2$$

$t_{fg}$  $t_{fg}$

N S N S N S N S N S N S N S N S N S N S N S N S N S N S N S N S N S N S N S N S

7e

7f

7

6

**Fig. 7**